# EUROPÄISCHE PATENTSCHRIFT

(11) **EP 0 870 877 B1**
(45) Veröffentlichungstag und Bekanntmachung des Hinweises auf die Patenterteilung: **19.07.2000**
(21) Anmeldenummer: 97105987.8
(22) Anmeldetag: 11.04.1997
(51) Int. Cl.: E03B 3/03, B65D 45/16, B65D 8/04, B65D 8/14

(54) **Tank**
Tank
Cuve

(43) Veröffentlichungstag der Anmeldung: 14.10.1998
(73) Patentinhaber: Graf, Otto Peter, 79312 Emmendingen (DE)
(72) Erfinder: Graf, Otto Peter, 79312 Emmendingen (DE)
(74) Vertreter: Blum, Rudolf Emil Ernst

(56) Entgegenhaltungen:
- DE-U- 9 416 968
- US-A- 3 072 285
- US-A- 3 101 154
- US-A- 4 034 896
- US-A- 4 040 372
- US-A- 5 222 619

## Beschreibung

Die Erfindung betrifft einen Tank, mit einem unteren Napf, der einen oberen Napfmündungsrand hat, und mit einem oberen Napf, der einen unteren Napfmündungsrand hat, mit Verbindungsmitteln, die die beiden Näpfe an ihren Mündungsrändern miteinander verbinden, mit einer beiden Näpfen gemeinsamen Längsachse, die in der Tank-Gebrauchslage vertikal steht.

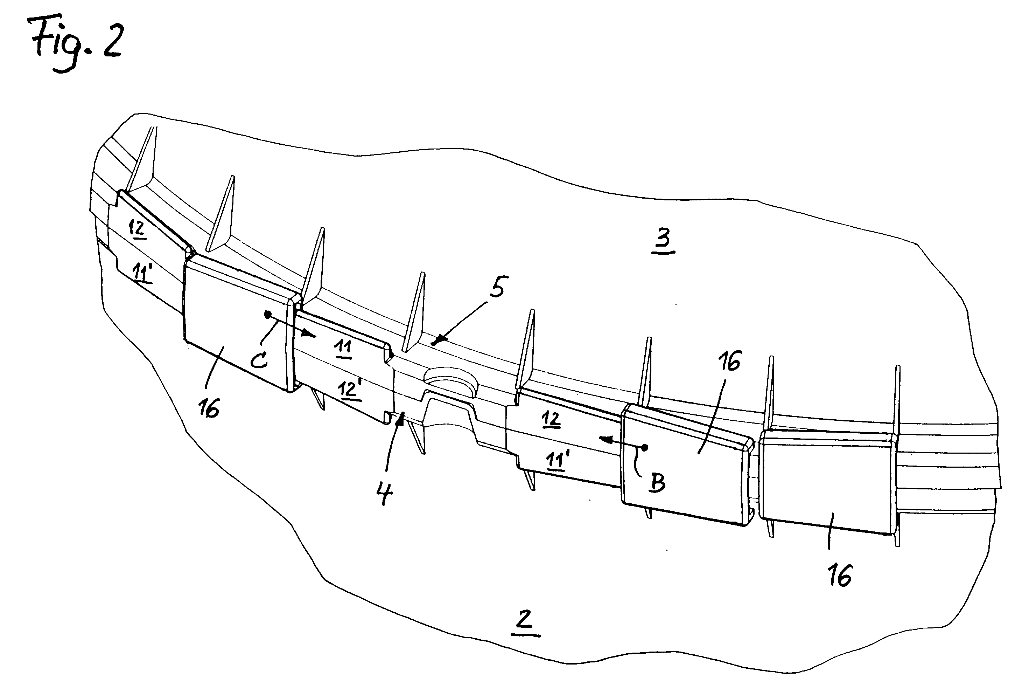

Ein solcher Tank ist durch die deutsche Gebrauchsmusterschrift Nr. 94 16 968 bekannt. Als Verbindungsmittel sind Schraubverbindungen offenbart oder solche lösbaren Verbindungen, die eine Vielzahl von über den Umfang der Napfmündungsränder verteilt vorhandene Löcher (Bohrungen) erfordern, wie aus Figur 2 der GM-Schrift hervorgeht. Diese Vielzahl von über den Umfang verteilten Löchern für die Verbindungsmittel ist nachteilig. Zum einen müssen diese Löcher gebohrt werden, und weiterhin müssen dann in alle diese Löcher Verbindungsmittel (Schrauben) eingesetzt werden. Da für solche Verbindungsmittel üblicherweise Metall verwendet wird, besteht die Gefahr der Korrosion. Eine Verschraubung der beiden Näpfe miteinander zum Bilden des Tankes ist also aus mehreren Gründen mit Nachteilen behaftet und soll mit der vorliegenden Erfindung verbessert werden.

Die erfindungsgemässe Ausbildung des Tanks ergibt sich aus dem kennzeichneneden Teil des Patentanspruchs 1.

Verbindungsmittel, die Keile und Keilklemmen verwenden, sind schon bei Rohrmuffen bekannt (CH-PS 677 395 und EU-Publikation 0011 252. Bei diesem Stand der Technik werden zwei rinnenförmige Rohrabschnitte zu einem Rohr (Muffe) verbunden. Die beiden Muffen-Halbschalen sind aber voneinander unterschiedlich, damit sich beim Zusammenbau zu einer Muffe auf jeder Muffenseite ein Ganzkeil ergibt.

Aus der US-5.222.619 ist ein Behälter mit Deckel bekannt, bei dem zwischen Behälter und Deckel Keilklemmen liegen zum Befestigen des Deckels am Behälter. Behälter und Deckel sind verschiedene Bauteile.

Demgegenüber können beim erfindungsgemässen Tank mit grossem Vorteil der untere Napf und der obere Napf einander identisch sein.

In der Zeichnung ist ein Ausführungsbeispiel des Erfindungsgegenstandes dargestellt. Es zeigen:
Figur 1 den Tank in schaubildlicher Darstellung,
Figur 2 ein Detail des Tankes nach Figur 1, im nur teilweise montierten Zustand, in vergrösserter Darstellung,
Figur 3 eine schematische Darstellung eines Ausschnittes der beiden Näpfe, in einem Zustand, in dem sie nicht miteinander verbunden werden können,
Figur 4 eine ähnliche Darstellung wie in Figur 3, in derjenigen Stellung der beiden Näpfe zueinander, in der sie miteinander verbunden werden können,
Figur 5 einen Schnitt nach der Linie V-V in Figur 1, ohne Keilklemme, und
Figur 6 eine Keilklemme in schaubildlicher Darstellung.

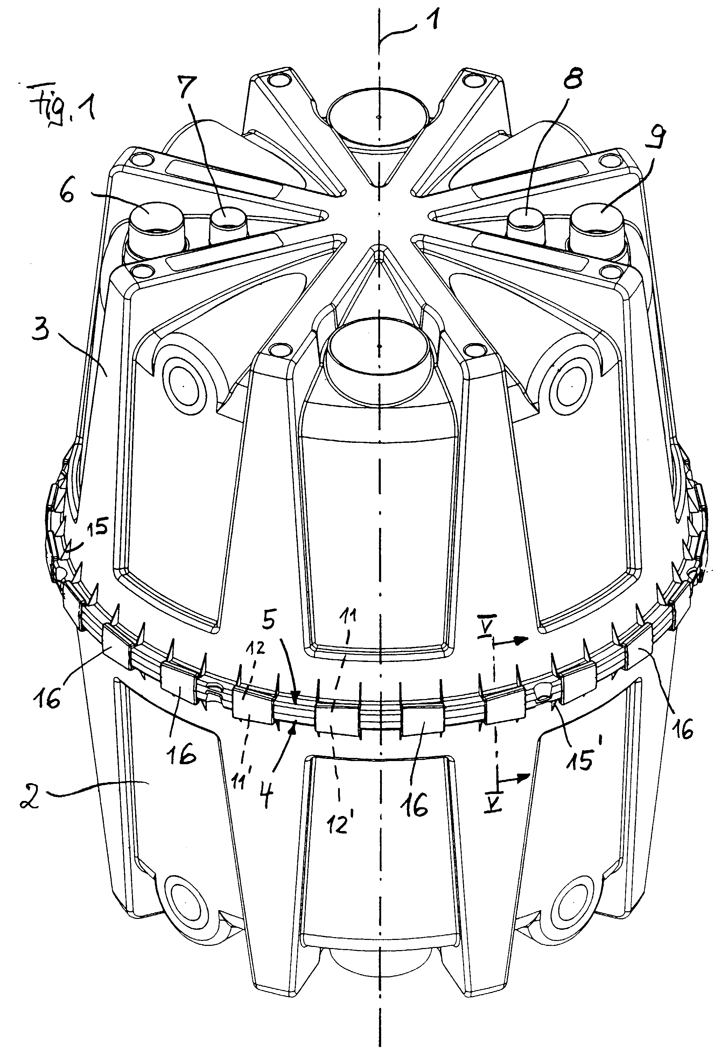

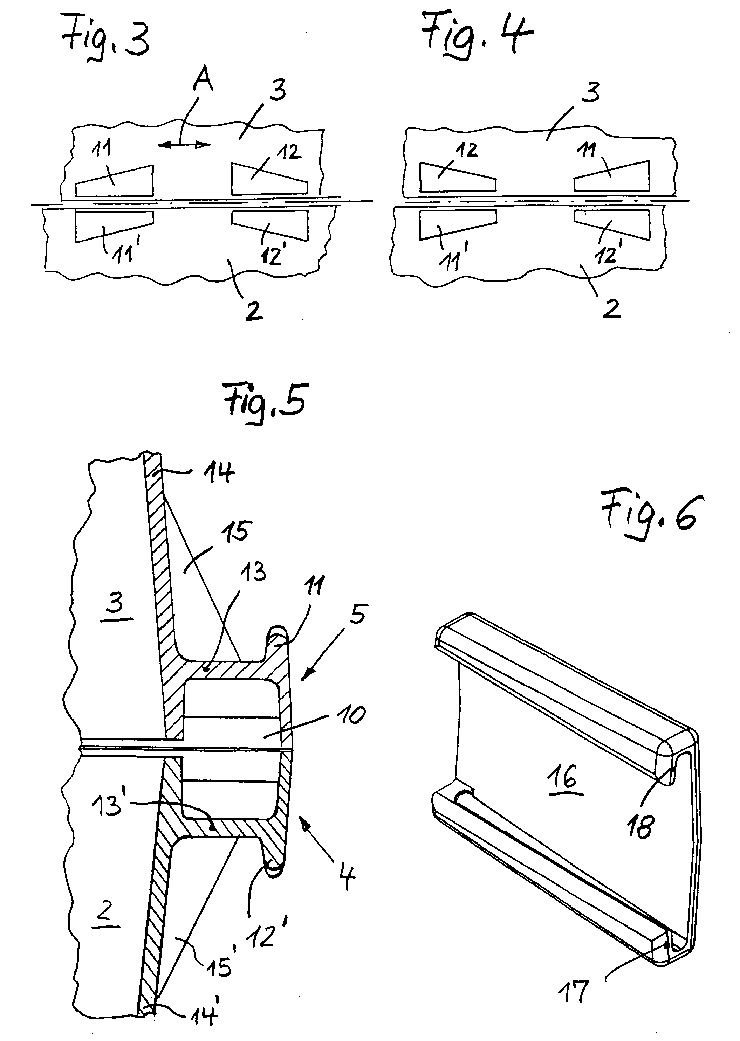

Bei vertikaler Längsachse 1 steht der in Figur 1 gezeigte Tank in seiner Gebrauchslage. Der Tank hat einen unteren Napf 2 und einen oberen Napf 3. Der untere Napf 2 hat einen oberen Napfmündungsrand 4, und der obere Napf 3 hat einen unteren Napfmündungsrand 5. Die beiden Näpfe 2 und 3 sind mit ihren Mündungsrändern 4 und 5 einander zugewandt und liegen mit diesen Mündungsrändern 4 und 5 über nicht dargestellte Dichtmittel aneinander an (Figur 1, 5) .

Die beiden Näpfe 2 und 3 bestehen aus einem Kunststoffmaterial und werden im Spritzgussverfahren hergestellt. Als Kunststoffmaterial hat sich sowohl Niederdruckpolyethylen (HDPE) als auch Polypropylen-Copolymer (PPC) bewährt. Beim in Figur 1 gezeigten Beispiel ist der obere Napf 3 mit Leitungs-Anschlussstutzen 6-9 versehen. Der untere Napf 3 kann in nicht dargestellter Weise mit ebensolchen Anschlussstutzen versehen sein. Da der Tank in üblicher Weise zum Aufnehmen von Regenwasser dient, müssen die beiden Näpfe 2 und 3 wasserdicht miteinander verbindbar sein. In üblicher Weise werden in einem Raum 10 zwischen den beiden Mündungsrändern 4 und 5 die nicht dargestellten Dichtmittel eingebracht.

Der Napfmündungsrand 5 des oberen Napfes 3 ist mit mehreren über seinen Umfang verteilt angeordneten Halbkeilen 11 und 12 versehen. Der Napfmündungsrand 4 des unteren Napfes 2 ist mit identischen Halbkeilen 11' und 12' versehen. Die über den Umfang des Napfmündungsrandes 4 verteilt angeordneten Halbkeile 11' und 12' wechseln einander in ihrer Steigungsrichtung ab, so dass die Keil-Anzugsrichtung einmal in der einen Umfangsrichtung und dann in der anderen Umfangsrichtung verläuft. Dies ist aus den Figuren 1-4 ersichtlich. Das gleiche gilt auch für die Halbkeile 11 und 12 am Mündungsrand 5, so dass also die über den Umfang des Mündungsrandes 5 verteilt angeordneten Halbkeile 11 und 12 einander in ihrer Steigungsrichtung abwechseln. Durch diese wichtige Massnahme ist es möglich geworden, dass der untere Napf 2 und der obere Napf 3 einander identisch sind, wie später noch erläutert wird. Aus den Figuren 1 und 2 ist ersichtlich, dass sich jeder Mündungsrand 4 und 5 kreisförmig über den Napfumfang, mit dem Zentrum in der Längsachse 1, erstreckt. Aus den Figuren 1, 2 und 5 ist ersichtlich, dass die Halbkeile 11, 12 des Napfes 3 an einem Flansch 13 vorhanden sind und durch diesen radial ausserhalb der übrigen Napfwandung 14 liegen. In gleicher Weise sind die Halbkeile 11' und 12' des Napfes 2 am Flansch 13' vorhanden und liegen durch diesen radial ausserhalb der übrigen Napfwandung 14' (Figur 5). Die Näpfe 2 und 3 sind im Bereich der Flansche 13, 13' mit Versteifungsrippen 15, 15' versehen.

Zum Zusammensetzen der beiden Näpfe 2 und 3 zum Tank wird folgendermassen vorgegangen. Wenn beide Näpfe 2 und 3 einander identisch sind können sie also auf ein und demselben Spritzwerkzeug hergestellt werden; sind also zwei nacheinander ausgeworfene Stücke der Spritzgussmaschine. Werden diese zwei identischen Näpfe 2, 3 mit ihren Mündungsrändern 4, 5 aneinander zur Anlage gebracht, so können die einander identischen Halbkeile 11, 11' sowie 12, 12' gemäss Figur 3 einander gegenüberliegen. In dieser Stellung können die beiden identischen Näpfe 2 und 3 nicht miteinander verbunden werden; es muss eine Verdrehung in Richtung des Doppelpfeiles A in Figur 3 um eine Teilung der über den Umfang verteilt angeordneten Halbkeile vorgenommen werden, so dass die Stellung nach Figur 4 entsteht. In Figur 4 stehen sich nunmehr zwei Halbkeile 11', 12 sowie 11, 12' einander gegenüber und bilden einen Ganzkeil 11', 12 oder 11, 12'. In dieser Stellung nach Figur 4 können nunmehr die beiden Näpfe 2 und 3 miteinander verbunden werden. Hierzu dienen gesondert vorhandene Keilklemmen 16, die ebenfalls in vorteilhafter Weise aus einem Kunststoffmaterial bestehen. Ueber jeden Ganzkeil 11', 12 oder 11, 12' kann nunmehr eine solche Keilklemme 16 geschoben werden, wobei die beiden Halbkeile 11', 12 oder 11, 12' zusammengepresst werden, so dass hierdurch die beiden Näpfe 2 und 3 mit ihren Mündungsrändern 4 und 5 aneinandergespresst werden. Jede Keilklemme 16 sitzt also mit Keilwirkung auf einem Ganzkeil 11', 12 oder 11, 12' auf und hintergreift die Halbkeile 11' und 12 oder 12' und 11. Zum Hintergreifen ist die Keilklemme 16 mit Stegen 17 und 18 versehen (Figur 6). In Figur 2 sind zwei Keilklemmen 16 gezeigt, bevor sie in Richtung der Pfeile B und C auf die Ganzkeile 11', 12 bzw. 11, 12' aufgetrieben werden. Eine Keilklemme 16 befindet sich bereits im montierten Zustand. Aus den Figuren 1 und 2 ist ersichtlich, dass die montierten Keilklemmen 16 auf einer Ringbahn, mit dem Zentrum in der Längsachse 1, liegen.

Dadurch, dass die über den Umfang des Napfmündungsrandes verteilt angeordneten Halbkeile einander in ihrer Steigungsrichtung abwechseln, ergibt sich der grosse Vorteil, dass die beiden Näpfe des Tankes einander identisch sein können, also zwei gleiche Spritzgussprodukte sind. Das bedeutet, dass nur ein einziges Spritzgusswerkzeug benötigt wird.

## Patentansprüche

1. Tank, mit einem unteren Napf (2), der einen oberen Napfmündungsrand (4) hat, und mit einem oberen Napf (3), der einen unteren Napfmündungsrand (5) hat, mit Verbindungsmitteln (11, 12'; 11', 12; 16), die die beiden Näpfe (2, 3) an ihren Mündungsrändern (4, 5) miteinander verbinden, mit einer beiden Näpfen (2, 3) gemeinsamen Längsachse (1), die in der Tank-Gebrauchslage vertikal steht, dadurch gekennzeichnet, dass jeder Napfmündungsrand (4 bzw. 5) mit mehreren über seinen Umfang verteilt angeordneten Halbkeilen (11', 12' bzw. 11, 12) versehen ist, dass die Halbkeile (11', 12' bzw. 11, 12) beider Näpfe (2, 3) sich zu Ganzkeilen (11', 12 bzw. 11, 12') ergänzen, und mit gesondert vorhandenen Keilklemmen (16), von denen jede über einen Ganzkeil (11, 12' bzw. 11', 12) schiebbar ist, zum Zusammenpressen der beiden Halbkeile (11, 12' bzw. 11', 12) und damit der beiden Näpfe (2 ,3), und dass die über den Umfang des Napfmündungsrandes (4 bzw. 5) verteilt angeordneten Halbkeile (11', 12' bzw. 11, 12) einander in ihrer Steigungsrichtung abwechseln und somit die Keil-Anzugsrichtung einmal in der einen Umfangsrichtung und dann in der anderen Umfangsrichtung verläuft.

2. Tank nach Anspruch 1, dadurch gekennzeichnet, dass der untere Napf (2) und der obere Napf (3) einander identisch sind.

3. Tank nach Anspruch 2, dadurch gekennzeichnet, dass die einander identischen Näpfe (2, 3) mit ihren einander identischen Napfmündungsrändern (4, 5) aneinander anliegen und um eine Teilung ihrer über den Umfang verteilt angeordneten Halbkeile (11', 12' bzw. 11, 12) um die gemeinsame Längsachse (1) verdreht zueinander liegen, so dass sich aus jeweils zwei einander gegenüberliegenden Halbkeilen (11, 12' bzw. 11', 12) ein Ganzkeil ergibt.

4. Tank nach einem der Ansprüche 1-3, dadurch gekennzeichnet, dass sich jeder Mündungsrand (4, 5) kreisförmig über den Napfumfang, mit dem Zentrum in der Längsachse (1), erstreckt.

5. Tank nach einem der Ansprüche 1-4, dadurch gekennzeichnet, dass der obere Napf (3) und der untere Napf (2) aus einem Kunststoffmaterial bestehen und als Spritzgussprodukte vorliegen.

6. Tank nach einem der Ansprüche 1-5, dadurch gekennzeichnet, dass die Halbkeile (11', 12' bzw. 11, 12) eines jeden Napfes (2 bzw. 3) an einem Flansch (13' bzw. 13) vorhanden sind und durch diesen radial ausserhalb der übrigen Napfwandung (14' bzw. 14) liegen.

7. Tank nach einem der Ansprüche 1-6, dadurch gekennzeichnet, dass sowohl der untere als auch der obere Napf (2 bzw. 3) je mit Leitungs-Anschlussstutzen (6-9) versehen ist.

8. Tank nach einem der Ansprüche 1-7, dadurch gekennzeichnet, dass die Ganzkeile (11, 12'; 11', 12) mit ihren aufsitzenden und sie hintergreifenden Keilklemmen (16) auf einer Ringbahn, mit dem Zentrum in der Längsachse (1), liegen.

9. Tank nach einem der Ansprüche 1-8, dadurch gekennzeichnet, dass die Keilklemmen (16) aus einem Kunststoffmaterial bestehen.

## Claims

1. A container, having a lower shell (2) with an upper port edge (4), and having an upper shell (3) with a lower port edge (5), and having coupling structures (11, 12'; 11', 12; 16) by means of which the two shells (2, 3) are coupled along their port edges (4, 5), and having a longitudinal axis (1) which is common to both shells (2, 3) and which extends vertically when the container is in its operational position, characterized in that each port edge (4 and 5, respectively) comprises a plurality of semi-wedges (11', 12' and 11, 12, respectively) located distributed along its circumference, that the semi-wedges (11', 12' and 11, 12, respectively) of both shells (2, 3) complete each other to form complete wedges (11', 12 and 11, 12', respectively), which container includes separate wedge clamps (16) of which each is slidable over one complete wedge (11, 12' and 11', 12, respectively) in order to press the two semi-wedges (11, 12' and 11', 12, respectively) and accordingly the two shells (2, 3) together, and that the semi-wedges (11', 12' and 11, 12, respectively) located distributed along the circumference of the port edge (4 and 5, respectively) alternate with regard to their direction of incline, whereby the direction of the wedge fastening movement is alternatingly in the one circumferential direction and in the opposite circumferential direction.

2. The container according to claim 1, characterized in that the lower shell (2) and the upper shell (3) are identical to each other.

3. The container according to claim 2, characterized in that the two identical shells (2, 3) contact each other along their identical port edges (4, 5) and are arranged rotationally staggered around the common longitudinal axis (1) relative to each other by one graduation of their semi-wedges (11', 12' and 11, 12, respectively) located distributed along the circumference, so that any two respective oppositely located semi-wedges (11, 12' and 11', 12, respectively) complete each other to form a complete wedge.

4. The container according to one of the claims 1-3, characterized in that each port edge (4, 5) extends circularly along the circumference of the shell, having the center located on the longitudinal axis (1).

5. The container according to one of the claims 1-4, characterized in that the upper shell (3) and the lower shell (2) consist of a plastic material and are injection molded products.

6. The container according to one of the claims 1-5, characterized in that the semi-wedges (11', 12' and 11, 12, respectively) of each shell (2 and 3, respectively) are present at a flange (13' and 13, respectively) and are located due to the flange outside of the rest of the shell wall (14 and 14', respectively).

7. The container according to one of the claims 1-6, characterized in that the lower and the upper shell (2 and 3, respectively) as well, includes each a connecting stub for a conduit (6-9).

8. The container according to one of the claims 1-7, characterized in that the complete wedges (11, 12' and 11', 12, respectively) with their wedge clamps (16) sitting on then and gripping around them are located on a circular line having its center on the longitudinal axis (1).

9. The container according to one of the claims 1-8, characterized in that the clamps (16) consist of a plastic material.

## Revendications

1. Cuve avec une coque inférieure (2) comportant un bord d'embouchure supérieur (4), et avec une coque supérieure (3) comportant un bord d'embouchure inférieur (5), avec des attaches (11, 12'; 11', 12; 16) réunissant les deux coques (2,3) le long de leurs bords d'embouchure (4,5), les deux coques ayant un axe longitudinal commun (1) orienté verticalement en position d'utilisation de la cuve, caractérisé en ce que chaque bord d'embouchure (4, respectivement 5) porte plusieurs demi-coins (11', 12', respectivement 11, 12) le long de sa périphérie, que les demi-coins (11', 12', respectivement 11, 12) des deux coques (2,3) se complètent pour former des coins entiers (11', 12, respectivement 11, 12'), avec des pinces séparées (16) pouvant chacune être engagée sur un coin entier ((11', 12, respectivement 11, 12') pour presser ses deux demi-coins (11', 12', respectivement 11, 12), et donc les deux coques (2,3) l'un contre l'autre, et en ce que les inclinaisons des demi-coins (11', 12', respectivement 11, 12) successifs répartis sur la périphérie du bord d'embouchure (4,5) alternent de manière à ce que la direction de serrage des coins soit orientée une fois dans un sens le long de la périphérie et une fois dans l'autre.

2. Cuve selon la revendication 1, caractérisé en ce que les coques inférieures (2) et supérieures (3) sont identiques.

3. Cuve selon la revendication 2, caractérisé en ce que les coques (2,3) identiques sont accolées le long de leurs bords d'embouchure identiques (4,5) de façon décalée en rotation autour de leur axe longitudinal commun (1) d'un angle correspondant à l'intervalle le long de la périphérie entre deux demi-coins (11', 12', respectivement 11, 12) successifs, de manière à ce que chaque paire de demi-coins (11', 12', respectivement 11, 12) se faisant face forme un coin entier.

4. Cuve selon une des revendications 1 à 3, caractérisé en ce que chaque bord d'embouchure (4,5) s'étend circulairement le long de la périphérie de la coque, son centre étant situé sur l'axe longitudinal (1).

5. Cuve selon une des revendications 1 à 4, caractérisé en ce que les coques supérieures (3)et inférieures (2) consistent en un matériau plastique et sont fabriquées par injection.

6. Cuve selon une des revendications 1 à 5, caractérisé en ce que les demi-coins (11', 12', respectivement 11, 12) de chaque coque (2, respectivement 3) sont agencés sur un rebord (13', respectivement 13) qui les positionne radialement à l'extérieur du reste de la paroi (14', respectivement 14) de la coque.

7. Cuve selon une des revendications 1 à 6, caractérisé en ce que les coques inférieures (2) et supérieures (3) sont chacune munie de tubulures (16) pour l'accouplement de conduites.

8. Cuve selon une des revendications 1 à 7, caractérisé en ce que les coins entiers (11', 12 respectivement 11, 12') y compris les pinces biseautées (16) calées sur ces coins sont répartis sur une trajectoire circulaire dont le centre est situé sur l'axe longitudinal (1).

9. Cuve selon une des revendications 1 à 8, caractérisé en ce que les pinces biseautées (16) sont en matière plastique.
